(19) **Europäisches Patentamt / European Patent Office / Office européen des brevets**

(11) **EP 2 366 118 B1**

(12) # FASCICULE DE BREVET EUROPEEN

(45) Date de publication et mention de la délivrance du brevet:
**31.10.2012 Bulletin 2012/44**

(21) Numéro de dépôt: **09796683.2**

(22) Date de dépôt: **14.12.2009**

(51) Int Cl.:
*G01S 7/02* *(2006.01)* *G01R 23/00* *(2006.01)*

(86) Numéro de dépôt international:
**PCT/EP2009/067130**

(87) Numéro de publication internationale:
**WO 2010/069938 (24.06.2010 Gazette 2010/25)**

(54) **RECEPTEUR NUMERIQUE LARGE BANDE COMPRENANT UN MECANISME DE DETECTION DES SAUTS DE PHASE**

DIGITALER BREITBANDEMPFÄNGER MIT MECHANISMUS ZUR ERKENNUNG VON PHASENSPRÜNGEN

WIDEBAND DIGITAL RECEIVER COMPRISING A PHASE JUMP DETECTION MECHANISM

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **16.12.2008 FR 0807068**

(43) Date de publication de la demande:
**21.09.2011 Bulletin 2011/38**

(73) Titulaire: **THALES**
**92200 Neuilly-sur-Seine (FR)**

(72) Inventeur: **BRIAND, Thierry**
**F-78290 Croissy sur Seine (FR)**

(74) Mandataire: **Brunelli, Gérald et al**
**Marks & Clerk France**
**Immeuble Visium**
**22, avenue Aristide Briand**
**94117 Arcueil Cedex (FR)**

(56) Documents cités:
**WO-A-2007/090730     FR-A- 2 695 730**
**US-A- 4 860 318**

- **ADAM KONRAD RUTKOWSKI ED - VAINIKAINEN P ET AL: "Measurement of microwave signals intrapulse parameters by means of IFM methods" MICROWAVES, RADAR AND WIRELESS COMMUNICATIONS, 2008. MIKON 2008. 17TH INTERNATIONAL CONFERENCE ON, IEEE, PISCATAWAY, NJ, USA, 19 mai 2008 (2008-05-19), pages 1-4, XP031324668 ISBN: 978-83-906662-8-0**

**Description**

L'invention concerne un récepteur numérique large bande comprenant un mécanisme de détection des sauts de phase.

Les récepteurs destinés à la détection de signaux radioélectriques, par exemple de type radar, doivent être capables de surveiller de larges bandes de fréquence notamment dans le domaine des micro-ondes. Ils doivent pouvoir détecter, par exemple, des impulsions de signaux radar. Ces impulsions peuvent présenter des modulations de type « chirp » ou de type code de phase, ces modulations étant utilisées par le radar pour comprimer l'impulsion à la réception. Les impulsions peuvent également être non modulées, si ce n'est par la modulation en tout ou rien définissant l'impulsion. Ces récepteurs ont entre autre pour rôle de caractériser les impulsions interceptées en estimant des paramètres tels que la date d'arrivée, la largeur d'impulsion, la fréquence centrale, la présence de modulation interne à l'impulsion et le cas échéant le type de modulation.

Bien que des traitements numériques interviennent habituellement dans l'architecture de ces récepteurs, les solutions actuelles visant à estimer les fréquences des signaux reçus, désignés dans la suite de la description par le sigle IFM ("Instantaneous Frequency Measurement" en langue anglaise), s'appuient majoritairement sur des techniques analogiques.

A titre d'exemple, une solution existante permettant une mesure instantanée de la fréquence du signal reçu est basée sur la création d'un régime d'ondes stationnaires dans une ligne de propagation attaquée à l'une de ses extrémités par le signal et à l'autre par le signal retardé. La périodicité des noeuds et des ventres donne une mesure grossière de la fréquence du signal reçu. La mesure de la position des noeuds et des ventres répartis le long de cette ligne donne une mesure fine de la fréquence du signal reçu. Ce type d'IFM est appelé fréquencemètre à échantillonnage spatial.

Une autre solution de l'état de l'art, qui est très répandue, est à base d'auto-corrélateurs ou de phasemètres. Le principe est dans ce cas de mesurer directement la différence de phase φ induite par une ligne à retard et d'en déduire la fréquence. Plusieurs étages, mis en parallèle, sont généralement nécessaires pour assurer la bande de fréquences et la précision souhaitées.

Les récepteurs mettant en oeuvre ces solutions utilisent des fonctions analogiques et sont donc soumis à des dérives telles que des variations de retards en fonction de la température, des imperfections de mesure de niveau ou de déphasage. Ceci induit une architecture volumineuse et un coût important.

Plus récemment, une demande de brevet français concernant un *récepteur numérique large bande de mesure de fréquence* déposée sous le N° 06/01205 décrit, à la différence des deux exemples précédents, une manière de numériser le signal dès l'entrée, et d'effectuer tous les traitements en numérique. La numérisation est effectuée à une fréquence d'échantillonnage très inférieure au critère de Shannon. Cela se traduit par une mesure de fréquence ambiguë $F_{mesure}$, également appelée fréquence fine dans la suite de la description, ladite fréquence pouvant être décrite par l'expression suivante :

$$F_{mesure} = \pm\left(F_{réelle} - j \times F_e\right) + \delta F \qquad\qquad (1)$$

dans laquelle $F_{réelle}$ est la fréquence réelle du signal reçu, j un entier positif, $F_e$ la fréquence d'échantillonnage du système et $\delta F$ est l'erreur de mesure due principalement au rapport signal à bruit.

Pour lever cette ambiguïté, N voies de mesure sont utilisées en parallèle, avec des fréquences d'échantillonnage décalées. Les N mesures de fréquences ambiguës sont associées pour lever ladite ambiguïté et obtenir une mesure de la fréquence réelle du signal incident. Cette mesure est appelée fréquence finale dans la suite de la description.

La détection de saut de phase est aujourd'hui absente de la plupart des récepteurs IFM large bande utilisés pour la détection de signaux tels que des impulsions radar. Il est alors difficile de caractériser complètement une impulsion de signal reçue et la détection de codes de phase, par exemple, n'est pas réalisable.

Le document "Measurement of microwave signals intrapulse parameters by means of IFM methods" (ADAM KONRAD RUTKOWSKI ED - VAINIKAINEN ET AL) divulgue un procédé pour mesurer des paramètres intra-pulse des signaux reçus dans un récepteur radio, en utilisant un dispositif IFM à ligne retard.

Un but de l'invention est notamment de minimiser les inconvénients précités.

A cet effet l'invention a pour objet récepteur numérique large bande comprenant au moins une antenne, un amplificateur, un dispositif IFM numérique de mesure de la fréquence du ou des signaux reçus se basant sur le résultat de transformées de Fourier discrètes TFD appliquées sur lesdits signaux reçus. Ledit récepteur comporte des moyens pour estimer périodiquement les sauts de phase desdits signaux en combinant les mesures de la phase desdits signaux produites par les transformées TFD.

Quatre mesures de phase $\varphi_{n+a}$, $\varphi_{n+b}$, $\varphi_{n+c}$, $\varphi_{n+d}$ correspondant aux résultats respectifs de quatre TFD appliquées à des instants référencés temporellement par les indices n+a, n+b, n+c et n+d peuvent être combinées afin de détecter et d'estimer une valeur de saut de phase $\Delta\varphi_n$ associée à une période de mesure.

Selon un aspect de l'invention, l'estimation de saut de phase $\Delta\varphi_n$ sur une période de mesure est déterminée en calculant la différence entre les écarts intermédiaires $\Delta\varphi_{n,1} = (\varphi_{n+b} - \varphi_{n+a})$ et $\Delta\varphi_{n,2} = (\varphi_{n+d} - \varphi_{n+c})$ en utilisant l'expression : $\Delta\varphi_n = \Delta\varphi_{n,2} - \Delta\varphi_{n,1}$.

Les indices des quatre mesures de phase $\varphi_{n+a}$, $\varphi_{n+b}$, $\varphi_{n+c}$, $\varphi_{n+d}$ sont, par exemple, choisis tels que $(b - a) = (d - c)$.

Dans un mode de réalisation, un saut de phase est détecté, par exemple, par le repérage d'un motif de deux pics consécutifs de mesures de phase dont l'espacement est lié au choix des indices a, b, c et d.

Selon un autre aspect de l'invention, les indices des quatre mesures de phase $\varphi_{n+a}$, $\varphi_{n+b}$, $\varphi_{n+c}$ et $\varphi_{n+d}$ peuvent être choisis tels que b= -c et a = -d.

Dans un mode de mise en oeuvre, le dispositif IFM numérique comprend N branches, chaque branche ayant pour rôle de mesurer la fréquence et la phase du ou des signaux reçus après numérisation, ladite numérisation étant effectuée avec une fréquence d'échantillonnage propre à chaque branche, les mesures de phase produites étant utilisées afin d'estimer pour chaque branche une valeur de saut de phase $\Delta\varphi_n$.

Une moyenne d'au moins K estimations de saut de phase peut être calculée à chaque période de mesure, K étant inférieur ou égal au nombre total de branches N.

Les mesures de saut de phase estimées à chaque période de mesure sont, par exemple, classées par catégories.

Selon un autre mode de réalisation, deux catégories de mesures sont définies, la première étant associée à un saut de phase de $\pm\,\pi$ et la seconde à un saut de phase de $\pm\,\pi/2$.

Les signaux d'intérêts sont, par exemple, des impulsions radar.

D'autres caractéristiques et avantages de l'invention apparaîtront à l'aide de la description qui suit donnée à titre illustratif et non limitatif, faite en regard des dessins annexés parmi lesquels :

- la figure 1 donne un exemple d'impulsion de signal et ses caractéristiques ;
- la figure 2 présente un exemple de récepteur numérique large bande comprenant un mécanisme de détection des sauts de phase ;
- la figure 3 illustre graphiquement le principe de la détection de sauts de phase :
- la figure 4 donne un exemple d'algorithme pouvant être utilisé pour la mise en oeuvre de la détection de sauts de phase.

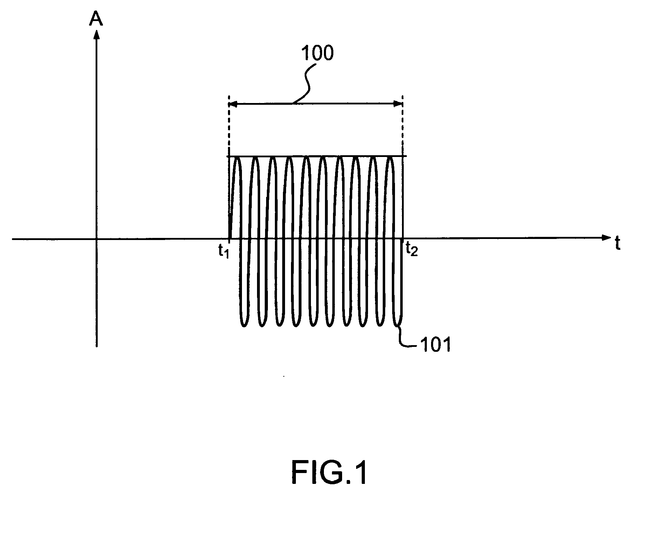

Le récepteur large bande selon l'invention a notamment pour but de détecter et caractériser des impulsions de signaux hyperfréquence. La figure 1 donne un exemple d'une impulsion 100 de signal et ses caractéristiques. Dans cette exemple, l'impulsion correspond à une sinusoïde pure, c'est-à-dire un signal non modulé, reçue au temps $t_1$ et se terminant au temps $t_2$.

Les paramètres à détecter associés à l'impulsion sont notamment la date d'arrivée de l'impulsion, habituellement désignée par le sigle TOA venant de l'expression anglaise « Time of Arrival », la largeur d'impulsion désignée par le sigle LI et la fréquence centrale du signal composant ladite impulsion.

L'impulsion peut également être caractérisée, lorsque celle-ci est modulée, par des paramètres de modulation de fréquence et de phase. Il peut être ainsi intéressant de détecter d'éventuels sauts de phase dans une impulsion de signal, et c'est ce que la présente invention se propose de faire.

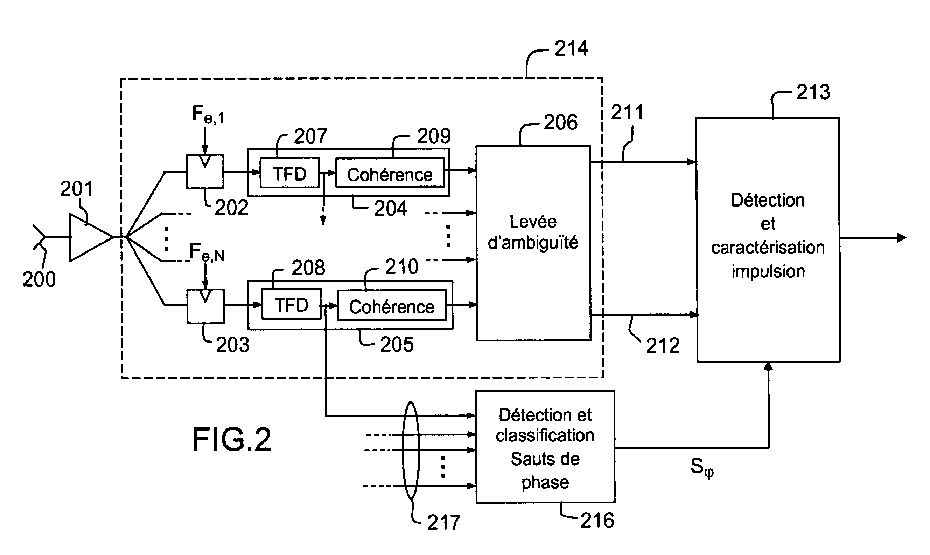

La figure 2 présente un exemple de récepteur numérique large bande selon l'invention comprenant des circuits radiofréquence de réception 200, 201, un dispositif de mesure de fréquence IFM 214, un dispositif de détection des sauts de phase 216 et un dispositif de détection et de caractérisation des impulsions 213. Le récepteur comprend au moins une antenne 200 de réception. Le ou les signaux reçus par ladite antenne sont amplifiés 201 puis distribués sur N voies de traitements numériques. Sur chaque voie, le signal peut être, par exemple, numérisé sur 1 bit par une bascule 202, 203 dont la bande passante couvre le domaine de la bande à traiter. Les N fréquences d'échantillonnage notées de $F_{e,1}$ à $F_{e,N}$ sont choisies en dessous du critère d'échantillonnage de Shannon et légèrement décalées entre elles. En d'autres termes, si $F_{max}$ est la fréquence maximum du ou des signaux à recevoir, les N fréquences d'échantillonnage sont choisies inférieures à $2 \times F_{max}$.

Chaque voie de traitement comprend un fréquencemètre numérique 204, 205 dont la sortie est une mesure de fréquence ambiguë du signal reçu telle qu'exprimée précédemment par l'équation (1). Ces fréquencemètres numériques réalisent des transformées de Fourier discrètes 207, 208, habituellement désignées par le sigle TFD, et sont effectuées en continu avec un recouvrement temporel, par exemple, de 50%. Une détection de maximum est effectuée sur chaque résultat $TFD_i$ de transformée, i désignant l'indice temporel desdites transformées. Une mesure de fréquence dite grossière notée $FG_{k,i}$ est alors disponible. La résolution en fréquence $R(FG_{k,i})$ de cette mesure peut être exprimée en utilisant l'expression suivante :

$$R\left(FG_{k,i}\right)=\frac{F_{e,k}}{N\_pt\_TFD\_k} \qquad (2)$$

dans laquelle N_pt_TFD_k est le nombre de points de la transformée de Fourier discrète pour la voie de traitement numéro k et $F_{e,k}$ la fréquence d'échantillonnage utilisée pour cette même voie.

Les mesures sont émises périodiquement toutes les $\tau$ secondes, $\tau$ pouvant s'exprimer par :

$$\tau=\frac{N\_pt\_acq\_k}{2\times F_{e,k}} \qquad (3)$$

dans laquelle N_pt_acq_k représente le nombre de point d'acquisition du signal utilisé sur la voie k.

La précision de la mesure de fréquence obtenue à ce stade est insuffisante par rapport à la précision requise.

Le circuit de traitement suivant 209, 210 a pour but de tester la cohérence de la fréquence grossière $FG_i$ obtenue sur 2 transformées consécutives, et le cas échéant de calculer la fréquence fine. Un critère de cohérence est, par exemple, de vérifier si l'écart entre $FG_{k,i}$ et $FG_{k,i-1}$ est supérieur à une raie de la TFD. Si c'est le cas, la voie k est considérée incohérente et la mesure d'indice i de la voie k est invalidée. Dans le cas contraire, la voie est considérée cohérente, la mesure est validée et la valeur de la mesure est alors appelée fréquence fine.

Le calcul de la fréquence fine repose sur la différence de phase entre deux TFD consécutives. Ces deux TFD sont effectuées sur des supports d'intégration décalés d'un temps $\tau$.

Les N voies fonctionnent en parallèle et sont synchronisées, c'est-à-dire que les séquences d'acquisition ont la même durée, soit $2\times\tau$ avec un recouvrement de 50%, et sont simultanées sur les N voies. Pour obtenir cette synchronisation, la valeur de $\tau$ est la même sur les N voies. Les décalages de fréquences d'échantillonnage sont compensés par des valeurs du nombre de point d'acquisition choisies légèrement différentes sur chaque voie, soit

$$\frac{N\_pt\_acq\_k}{2\times F_{e,k}}=\tau=Cte \text{ pour tout k.}$$

Les calculs TFD peuvent être faits soit sur le même nombre de points que N_pt_acq_k, ce qui nécessite des algorithmes particuliers, soit sur un nombre de point supérieur pour atteindre le $2^n$ supérieur par remplissage avec des zéros. Ainsi il est possible d'utiliser les algorithmes classiques de transformée de Fourier rapide, connue sous le sigle FFT, ledit sigle faisant référence à l'expression anglo-saxonne « Fast Fourier Transform ».

Etant donnée que les N voies de traitement fournissent des mesures de fréquence reçues à une ambiguïté près, il est nécessaire d'ajouter un mécanisme permettant d'obtenir une mesure fiable. Pour cela, un dispositif de levée d'ambiguïté 206 peut être utilisé. Ce dispositif a pour but de déduire des mesures de fréquences fines une valeur fiable de mesure de fréquence.

Un indicateur de cohérence 212 de la mesure peut être présenté en sortie de dispositif de levée d'ambiguïté en parallèle de la valeur de fréquence mesurée 211.

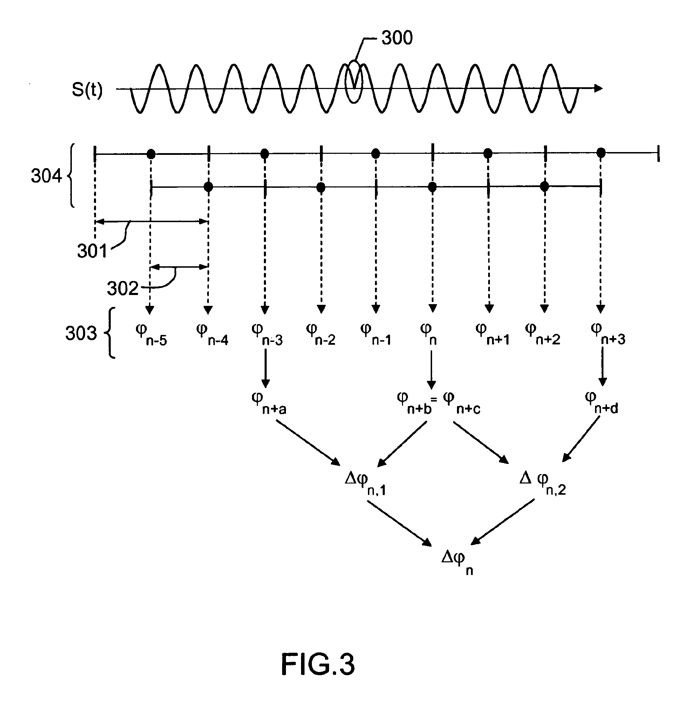

Afin de détecter et classifier les éventuels sauts de phase se produisant au sein d'une impulsion de signal, un dispositif 216 peut être ajouté à l'IFM. Ce module 216 exploite notamment les mesures de phase 217 disponibles en sortie des TFD 207,208 et associées à chaque voie. Le principe de l'estimation des sauts phase selon l'invention est illustré à l'aide de la figure 3.

Les fonctions réalisées par les N voies 204, 205 d'estimations de fréquence, par les dispositifs de levée d'ambiguïté 206, par le dispositif de détection des sauts de phase 216 et par le dispositif de détection et caractérisation des impulsions 213 peuvent être implantées, par exemple, dans au moins un circuit programmable de type FPGA.

La figure 3 illustre le principe de l'estimation des sauts de phase selon l'invention. La phase en sortie des TFD dépend de la référence de temps de la séquence d'acquisition. La fréquence fine calculée par chaque voie de l'IFM numérique peut être mesurée en faisant l'hypothèse que le signal n'était pas modulé. Dans ce cas la fréquence est déduite de l'écart de phase $\Delta\varphi=2.\pi.f.\tau$, avec $\tau$ représentant la différence de référence de temps entre 2 TFD consécutives.

En présence d'un saut de phase $S\varphi$ situé au niveau de l'espace libre entre les 2 TFD, si l'écart de phase $\Delta\varphi_n$ est calculé entre deux valeurs de phase obtenues par deux TFD plus éloignées d'indice n-i et n, l'écart $\Delta\varphi_n$ peut s'exprimer par l'expression :

$$\Delta\varphi_n = \varphi_n - \varphi_{n-1} = 2.\pi.f.i.\tau + S\varphi \qquad (4)$$

A titre d'exemple, i peut prendre la valeur 3 afin de disposer d'un espace libre de $\tau$ entre les 2 supports d'intégration lorsqu'un recouvrement de 50% a été choisi.

Pour estimer la valeur du saut de phase $S\varphi$, il est nécessaire de compenser le terme $2\times\pi\times f\times i\times\tau$. Cela peut être réalisé par une mesure de compensation dans une zone supposée non perturbée par un saut de phase, c'est-à-dire soit juste avant soit juste après ledit saut. Une hypothèse sur la durée minimum d'une telle zone temporelle doit être prise de manière à ce que pendant la durée totale de mesure, c'est-à-dire la durée nécessaire à la mesure du saut et à la mesure de compensation, il n'y ait qu'un saut de phase à la fois.

Lorsqu'un récepteur numérique large bande tel que celui décrit figure 2 est utilisé, des mesures de phase sont disponibles pour chaque branche au rythme d'une mesure $\varphi_n$ toute les $\tau$ secondes. Le principe d'estimation de sauts de phase selon l'invention est d'utiliser quatre mesures de phase d'indice n+a, n+b, n+c, n+d par cycle de mesure et de calculer l'écart de phase $\Delta\varphi_n$ à partir de deux écarts intermédiaires $\Delta\varphi_{n,1}$ et $\Delta\varphi_{n,2}$ correspondant à deux phases de mesures en utilisant l'expression suivante :

$$\Delta\varphi_n = \Delta\varphi_{n,2} - \Delta\varphi_{n,1} = (\varphi_{n+d} - \varphi_{n+c}) - (\varphi_{n+b} - \varphi_{n+a}) \qquad (5)$$

Les sauts de phases peuvent se produire n'importe où dans les cycles de mesures et se décaleront de $\tau$ à chaque cycle. Ils vont donc parcourir toute la période de mesure. Cela se traduit par 2 pics de mesures de signes opposés. Le premier pic correspond au passage du saut de phase dans la 1ère phase de mesure $\Delta\varphi_{n,1}$, soit entre a et b. Le deuxième pic correspond au passage du saut de phase dans la 2ème phase de mesure $\Delta\varphi_{n,2}$, c'est-à-dire entre c et d.

L'exemple de la figure 3 illustre ce principe d'estimation des sauts de phase. Un signal S(t) est reçu en entrée du récepteur large bande. Ledit signal est une sinusoïde présentant un saut de phase de $\pi$ 300. Au niveau de chaque fréquencemètre numérique, des TFD sont effectuées en continu sur des durées d'acquisition du signal décalées 302 d'un temps $\tau$ l'une par rapport à l'autre. Chaque TFD est calculée sur une durée d'acquisition du signal prédéfinie 301 et, pour ce qui est de l'exemple de la figure, $\tau$ 302 est choisi comme étant la moitié de cette durée (recouvrement de 50%). Pour chaque période de calcul 301, une mesure 303 de la phase du signal est disponible. Il y a donc une mesure de disponible toute les $\tau$ secondes. La figure représente 9 mesures de phase notées de $\varphi_{n-5}$ à $\varphi_{n+3}$. Ces mesures vont être utilisées pour détecter d'éventuels sauts de phase. En utilisant l'expression (5) et en prenant pour cet exemple a = -3, b = c = 0 et d = 3, $\Delta\varphi_{n,1}$ et $\Delta\varphi_{n,2}$ sont calculés pour ensuite déduire une estimation de $\Delta\varphi_n$. Dans l'exemple choisi, $\Delta\varphi_n \approx \pi$.

Pour ne pas avoir à faire des compensations, le calcul de déphasage doit être fait en utilisant le même numéro de filtre pour les 4 TFD d'indice a, b, c et d. Mais en cas d'un signal à cheval entre 2 filtres TFD et en présence de bruit, la détection du maximum de niveau peut osciller entre 2 filtres TFD adjacents. Il est donc conseillé de tolérer un gabarit de $\pm$ m échantillons sur les indices de raie des détections de maximum, celui-ci étant appelé dans la suite de la description « gabarit d'association ». Si le gabarit d'association est respecté, la détection de saut de phase est faite en utilisant le numéro de raie le plus récurrent. Dans le cas contraire, la détection de saut de phase est invalidée sur la voie concernée.

Le choix des paramètres a, b, c et d détermine l'efficacité de la détection de sauts de phase. Plusieurs orientations peuvent être prises :

- b-a = d-c = i pour obtenir 2 pics de même amplitude, avec une compensation symétrique, i représentant la durée sur laquelle est calculée chaque écart intermédiaire $\Delta\varphi_{n,1}$ et $\Delta\varphi_{n,2}$ ;
- b = -c, d'où a = -d pour obtenir une mesure centrée ;
- i suffisamment grand, par exemple i ≥ 3, pour que la valeur des pics corresponde à l'amplitude du saut de phase. Si i est inférieur, la mesure n'atteint pas l'amplitude réelle du saut de phase.

L'erreur de phase due au bruit ne dépend que du rapport signal-à-bruit S/B. Donc, pour favoriser la détection des sauts de phase en terme de S/B, il est conseillé de choisir la configuration des paramètres [a b c d] fournissant l'amplitude de mesure maximale, c'est-à-dire i ≥ 3. En revanche, pour favoriser la détection des moments de courte durée et pour limiter la fausse alarme face à une impulsion modulée par un chirp de pente rapide, il faut resserrer les supports, d'où la nécessité de trouver un compromis.

Dans le cas d'une modulation chirp, c'est-à-dire d'une modulation linéaire en fréquence, un saut de phase permanent apparaît sur l'impulsion.

En effet, si F(t) = p$\times$(t-t$_m$), p représentant la pente de la modulation, la phase $\varphi(t)$ s'écrit alors :

$$\varphi(t) = 2\pi\times(1/2.p.t^2 + p.t_m.t) \qquad (6)$$

$\Delta\varphi_n$ est constant et peut s'exprimer par l'expression suivante :

$$\Delta\varphi_n = 2\pi\times p\times\tau^2\times i\times j \qquad (7)$$

dans laquelle :

- i représente l'écart entre les deux supports de chaque groupe et s'écrit i = b-a = d-c ;
- j représente l'écart entre les 2 groupes et s'écrit j = (c+d)/2 - (a+b)/2.

Pour limiter l'amplitude de ce saut apparent il faut resserrer les deux groupes de mesure, en imposant par exemple b = c = 0, ce qui implique i = j = d = -a. Pour favoriser le traitement des moments de courte durée, il est possible de choisir (d-a) minimum car il est requis de n'avoir qu'un saut de phase à la fois dans la période de mesure.

En fonction des besoins ciblés lors de la mise en oeuvre de l'invention, un quadruplet de paramètres [a b c d] est déterminé.

L'IFM numérique du récepteur dispose de N voies qui ne diffèrent que par leur fréquence d'échantillonnage. En termes de mesure de saut de phase, les N voies fournissent la même information. Pour améliorer le fonctionnement en terme de rapport S/B, il est approprié d'effectuer la moyenne des valeurs de saut de phase obtenues sur les N voies.

Il est important de noter que la phase étant définie à $2\pi$ près, pour un saut de $\pi$, le signe du saut est indéterminé, en effet $+\pi = -\pi$ modulo $2\pi$.

Suivant la composante spectrale repliée entre 0 et $F_e/2$, le signe peut-être inversé. Le signe '+' sera obtenu si $k.F_e<F<(k+0.5)F_e$, alors que le signe '-' sera obtenu si $(k+0.5)\times F_e < F < (k+1)\times F_e$.

Le sens des sauts de phases n'est habituellement pas requis. Le besoin habituel est de classifier les valeurs de saut de phase en catégories. A titre d'exemple, deux catégories peuvent être définies :

- Catégorie 1 : saut de $\pm\,\pi$ ;
- Catégorie 2 : saut de $\pm\,\pi/2$.

Compte tenu de ces remarques il est requis de passer en valeur absolue avant de calculer la moyenne. Cela a pour effet de ramener les valeurs d'estimation entre 0 et $\pi$.

Du fait de l'échantillonnage et la quantification sur 1 bit, un signal non modulé et sans bruit présente des sauts de phase « parasites ». Par exemple, si $f \approx k.F_e/2$, soit $FR \approx 0$ soit $FR \approx F_e/2$, FR étant la fréquence repliée et le signal numérique présente des sauts de $\pi$. De manière à s'affranchir de ce phénomène, si pour une des N voies $f = k.F_e/2$, la valeur de saut de phase de cette voie n'est pas prise en compte dans le calcul de la moyenne.

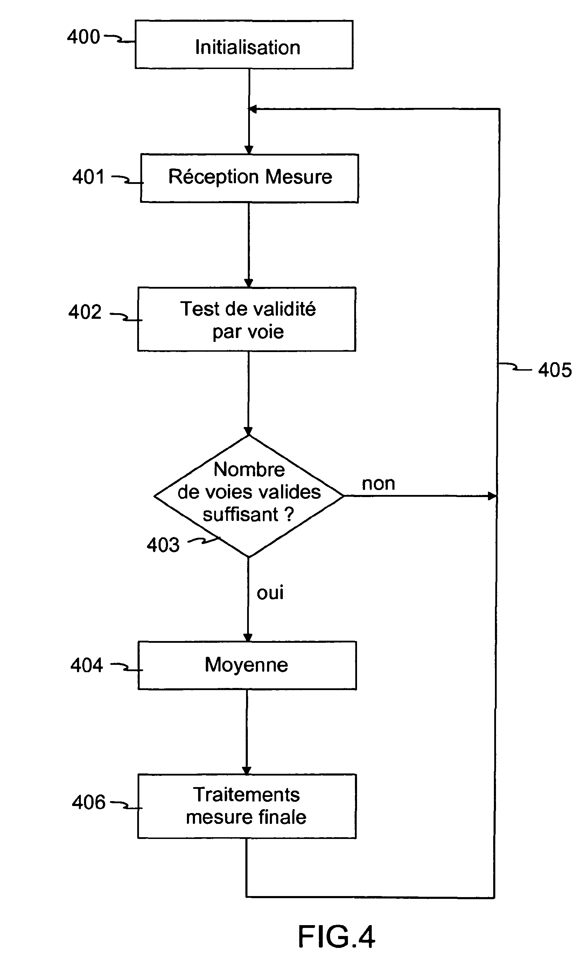

La figure 4 donne un exemple d'algorithme pouvant être utilisé pour la mise en oeuvre de la détection de sauts de phase.

L'algorithme s'appuie sur l'utilisation des N voies du récepteur large bande. Suite à une phase d'initialisation 400, les résultats de l'estimation en phase effectuées par les N voies sont reçues 401 et les N valeurs des sauts de phase sont calculées telles que décrites à l'aide de la figure 3. Lesdits résultats sont ensuite testés 402 de manière à s'assurer que ceux-ci sont valides et donc disponibles pour le calcul de la moyenne. A titre d'exemple, une mesure de saut de phase sur une voie est validée si le gabarit d'association est respecté et que la mesure fréquence est éloignée de la fréquence $k.F_e/2$, c'est-à-dire que l'écart entre la mesure et la fréquence $k.F_e/2$ est supérieur à un seuil prédéfini.

La mesure finale de saut de phase est considérée invalide et n'est pas calculée si, par exemple, il n'y a pas assez de mesures de saut de phase disponibles. Pour cela, l'algorithme teste 403 si ce nombre de mesure est supérieur à une valeur prédéfinie $N_{mes}$. Ce critère permet notamment de diminuer nettement la probabilité de fausse alarme à très faible rapport S/B.

Si le test de validité n'est pas passé avec succès, aucune mesure finale de saut de phase n'est calculée et l'algorithme se met en attente des prochaines mesures de phase 405.

Si le test de validité est passé avec succès, une mesure finale est calculée 404. Cette mesure finale est la moyenne des valeurs absolues des sauts de phase disponibles.

Les mesures finales sont ensuite traitées 406, afin, par exemple, de les associer à une catégorie de mesures. Les pics, c'est-à-dire les maximums locaux, sont retenus car l'information utile « amplitude du saut de phase » se situe précisément dans la valeur de ces pics.

Parmi ces pics, deux catégories peuvent être distinguées à l'aide de deux seuils S1 et S2. Les pics sont associés à une première catégorie C1, correspondant à des sauts de phase de $\pi$ en vérifiant la condition :

$$pic > S1 \qquad\qquad (8)$$

S1 étant une valeur prédéfinie de seuil. De la même manière, les pics sont associés à une seconde catégorie C2 correspondant à des sauts de phase de $\pi/2$ s'ils vérifient la condition :

$$S1 \geq pic \geq S2 \qquad\qquad (9)$$

S2 étant une seconde valeur prédéfinie de seuil. Les pics de valeur strictement inférieure à S2 sont rejetés.

Indépendamment dans chaque catégorie, des motifs de 2 pics consécutifs sont recherchés avec le bon écart, cet écart étant dépendant de l'écart entre les 2 périodes de mesure.

Si cet écart est respecté, un saut est détecté. Ce saut est daté à l'instant intermédiaire entre les 2 pics et est associé à un saut de $\pi$ ou bien à un saut de $\pi/2$ suivant la catégorie d'origine, respectivement C1 et C2.

L'intérêt de cette méthode est de pouvoir détecter des couples très rapprochés, c'est-à-dire des moments de courte durée. En effet l'écart entre deux couples successifs peut être inférieur à l'écart entre les deux pics d'un couple.

Un autre avantage est la diminution du taux de fausses alarmes en présence d'impulsion modulées avec un chirp de pente élevée ou bien avec un rapport S/B très faible. En effet il ne suffit pas de franchir le seuil, il faut également obtenir le bon motif, c'est-à-dire 2 pics avec le bon écart.

## Revendications

1. Récepteur numérique large bande comprenant au moins une antenne (200), un amplificateur (201), un dispositif IFM numérique (214) comprenant au moins une branche d'estimation (204, 205) mesurant à différents instants la fréquence et la phase $\varphi_n$ du signal reçu après numérisation (202, 203), ces mesures étant mises en oeuvre par l'utilisation de transformées de Fourier discrètes TFD appliquées sur ledit signal reçu, le récepteur étant **caractérisé en ce qu'**il comporte des moyens (216) pour estimer périodiquement les sauts de phase au sein du signal reçu en déterminant au moins deux écarts de phase intermédiaires $\Delta\varphi_{n,1}$, $\Delta\varphi_{n,2}$ et en déduisant une valeur de saut de phase $\Delta\varphi_n$ de la comparaison entre lesdits écarts de phase intermédiaires.

2. Récepteur selon la revendication 1 **caractérisé en ce que** quatre mesures de phase ($\varphi_{n+a}$, $\varphi_{n+b}$, $\varphi_{n+c}$, $\varphi_{n+d}$) correspondant aux résultats respectifs de quatre TFD appliquées à des instants référencés temporellement par les indices n+a, n+b, n+c et n+d sont combinées afin de détecter et d'estimer une valeur de saut de phase $\Delta\varphi_n$ associée à une période de mesure.

3. Récepteur selon la revendication 2 **caractérisé en ce que** l'estimation de saut de phase $\Delta\varphi_n$ sur une période de mesure est déterminée en calculant la différence entre les écarts intermédiaires $\Delta\varphi_{n,1} = (\varphi_{n+b} - \varphi_{n+a})$ et $\Delta\varphi_{n,2} = (\varphi_{n+d} - \varphi_{n+c})$ en utilisant l'expression : $\Delta\varphi_n = \Delta\varphi_{n,2} - \Delta\varphi_{n,1}$.

4. Récepteur selon l'une des revendications 2 ou 3 **caractérisé en ce que** les indices des quatre mesures de phase ($\varphi_{n+a}$, $\varphi_{n+b}$, $\varphi_{n+c}$, $\varphi_{n+d}$) sont choisis tels que (b - a) = (d - c).

5. Récepteur selon l'une quelconque des revendications 2 à 4 **caractérisé en ce qu'**un saut de phase est détecté par le repérage d'un motif de deux pics consécutifs de mesures de phase dont l'espacement est lié au choix des indices a, b, c et d.

6. Récepteur selon l'une quelconque des revendications 2 à 5 **caractérisé en ce que** les indices des quatre mesures de phase $\varphi_{n+a}$, $\varphi_{n+b}$, $\varphi_{n+c}$ et $\varphi_{n+d}$ sont choisis tels que b= -c et a = -d.

**7.** Récepteur selon l'une quelconque des revendications précédentes **caractérisé en ce que** le dispositif IFM numérique (214) comprend N branches (204, 205), chaque branche ayant pour rôle de mesurer la fréquence et la phase du ou des signaux reçus après numérisation (202, 203), ladite numérisation étant effectuée avec une fréquence d'échantillonnage ($F_{e,1}$, ..., $F_{e,N}$) propre à chaque branche, les mesures de phase produites étant utilisées afin d'estimer pour chaque branche une valeur de saut de phase $\Delta\varphi_n$.

**8.** Récepteur selon la revendication 7 **caractérisé en ce qu'**une moyenne d'au moins K estimations de saut de phase est calculée à chaque période de mesure, les K estimations de saut de phase étant obtenues sur K branches, K étant inférieur ou égal au nombre total de branches N.

**9.** Récepteur selon l'une quelconque des revendications précédentes **caractérisé en ce que** les mesures de saut de phase estimées à chaque période de mesure sont classées par catégories.

**10.** Récepteur selon la revendication 9 **caractérisé en ce que** deux catégories de mesures sont définies, la première étant associée à un saut de phase de $\pm\,\pi$ et la seconde à un saut de phase de $\pm\,\pi/2$.

**11.** Récepteur selon l'une quelconque des revendications précédentes **caractérisé en ce que** les signaux d'intérêts sont des impulsions radar.

**Claims**

**1.** A wide band digital receiver compiling at least one antenna (200), one amplifier (201) and one digital IFM device (214) comprising at least one estimating branch (204, 205) measuring at different instants the frequency and the phase $\varphi_n$ of the received signal after digitisation (202, 203), these measurements being implemented by the use of discreet Fourier transforms DFT applied to said received signal, said receiver being **characterised in that** it comprises means (216) for periodically estimating the phase jumps within the received signal by determining at least two intermediate phase deviations $\Delta\varphi_{n,1}$, $\Delta\varphi_{n,2}$, and thus deducing a phase jump value $\Delta\varphi_n$ of the comparison between said intermediate phase deviations.

**2.** The receiver according to claim 1 **characterised in that** four phase measurements ($\varphi_{n+a}$, $\varphi_{n+b}$, $\varphi_{n+c}$, $\varphi_{n+d}$) that correspond to the respective results of four DFTs applied at instants referenced in time by the indices n+a, n+b, n+c and n+d are combined so as to detect and estimate a phase jump value $\Delta\varphi_n$ associated with a measurement period.

**3.** The receiver according two claim 2, **characterised in that** the phase jump estimate $\Delta\varphi_n$ over a measurement period is determined by calculating the difference between the intermediate deviations $\Delta\varphi_{n,1} = (\varphi_{n+b} - \varphi_{n+a})$ and $\Delta\varphi_{n,2} = (\varphi_{n+d} - \varphi_{n+c})$ using the expression:

$$\Delta\varphi_n = \Delta\varphi_{n,2} - \Delta\varphi_{n,1}.$$

**4.** The receiver according two claim 2 or 3, **characterised in that** the indices of the four phase measurements ($\varphi_{n+a}$, $\varphi_{n+b}$, $\varphi_{n+c}$, $\varphi_{n+d}$) are selected so that (b - a) = (d - c).

**5.** The receiver according to any one of claims 2 to 4, **characterised in that** a phase jump is detected by the identification of a pattern of two consecutive phase measurement peaks, the spacing of which is associated with the selection of the indices a, b, c and d.

**6.** The receiver according to many one of claims 2 to 5, **characterised in that** the indices of the four phase measurements $\varphi_{n+a}$, $\varphi_{n+b}$, $\varphi_{n+c}$, and $\varphi_{n+d}$ are selected so that b= -c and a= -d.

**7.** The receiver according to any once of the preceding claims, **characterised in that** the digital IFM device (214) comprises N branches (204, 205), the role of each branch being to measure the frequency and the phase of the one or more received signals after digitisation (202, 203), said digitisation being carried out with a sampling frequency ($F_{e,1}$, ..., $F_{e,N}$) that is specific to each branch, the phase measurements produced being used so as to estimate a phase jump value $\Delta\varphi_n$ for each branch.

8. The receiver according to claim 7, **characterised in that** an average of at least K phase jump estimates is calculated in each measurement period, the K phase jump estimates being obtained on K branches, K being less than or equal to the total number of branches N.

9. The receiver according to any one of the preceding claims, **characterised in that** the phase jump measurements estimated in each measurement period are classified by categories.

10. The receiver according to claim 9, **characterised in that** two measurement categories are defined, the first being associated with a phase jump of $\pm \pi$ and the seconde with a phase jump of $\pm \pi/2$.

11. The receiver according two any one of the preceding claims, **characterised in that** the signals of interest are radar pulses.

**Patentansprüche**

1. Digitaler Breitbandempfänger, der Folgendes umfasst: wenigstens eine Antenne (200), einen Verstärkter (201), ein digitales IFM-Gerät (214), das weinigstens einen Schätzzweig (204, 205) umfasst, der zu verschiedene Zeitpunkten die Frequenz und die Phase $\varphi_n$ des empfangenen Signals nach der Digitalisierung (202, 203) misst, wobei diese Messungen unter Anwendung von diskreten Fourier-Transformationen DFT erfolgen, die auf das empfangene Signal angewandt werden, wobei der Empfänger **dadurch gekennzeichnet ist, dass** er Mittel (216) zum periodischen Schätzen der Phasensprünge in dem empfangenen Signal durch Ermitteln von weinigstens zwei Zwischenphasenabweichungen $\Delta\varphi_{n,1}$, $\Delta\varphi_{n,2}$ und somit Ableiten eines Phasensprungwertes $\Delta\varphi_n$ von dem Vergleich zwischen den Zwischenphasenabweichungen umfasst.

2. Empfänger nach Anspruch 1, **dadurch gekennzeichnet, dass** vier Phasenmessungen ($\varphi_{n+a}$, $\varphi_{n+b}$, $\varphi_{n+c}$, $\varphi_{n+d}$), die den jeweiligen Ergebnissen von vier DFTs entsprechen, die zu Zeitpunkten angewandt werden, die zeitlich durch die Indexe n+a, n+b, n+c und n+d referenziert werden, kombiniert werden, zum einen mit einer Messperiode assoziierten Phasensprungwert $\Delta\varphi_n$ zu erfassen und zu schätzen.

3. Empfänger nach Anspruch 2, **dadurch gekennzeichnet, dass** die Phasensprungschätzung $\Delta\varphi_n$ über eine Messperiode durch Berechnen der Differenz zwischen den Zwischenabweichungen $\Delta\varphi_{n,1} = (\varphi_{n+b} - \varphi_{n+a})$ und $\Delta\varphi_{n,2} = (\varphi_{n+d} - \varphi_{n+c})$ unter Verwendung des Ausdrucks $\Delta\varphi_n = \Delta\varphi_{n,2} - \Delta\varphi_{n,1}$ ermittelt wird.

4. Empfänger nach Anspruch 2 oder 3, **dadurch gekennzeichnet, dass** die Indexe der vier Phasenmessungen ($\varphi_{n+a}$, $\varphi_{n+b}$, $\varphi_{n+c}$, $\varphi_{n+d}$) so gewählt werden, dass (b - a) = (d - c) ist.

5. Empfänger nach einem der Ansprüche 2 bis 4, **dadurch gekennzeichnet, dass** ein Phasensprung anhand der Erkennung eines Musters von zwei aufeinander folgenden Phasenmessspitzen erfasst wirt, deren Abstand mit der Auswahl der Indexe a, b, c und d verbunden ist.

6. Empfänger nach einem der Ansprüche 2 bis 5, **dadurch gekennzeichnet, dass** die Indexe der vier Phasenmessungen $\varphi_{n+a}$, $\varphi_{n+b}$, $\varphi_{n+c}$, und $\varphi_{n+d}$ so gewählt werden, dass b= -c und a= -d ist.

7. Empfänger nach einem der vorherigen Ansprüche, **dadurch gekennzeichnet, dass** das digitale IFM-Gerält- (214) N Zweige (204, 205) umfasst, wobei die Aufgabe jedes Zweigs darin besteht, Frequenz und Phase des oder der empfangenen Signals/e nach der Digitalisierung (202, 203) zu messen, wobei die Digitalisierung mit einer für den jeweiligen Zweig spezifischen Abtastfrequenz ($F_{e,1}$, ..., $F_{e,N}$) erfolgt, wobei die erzeugten Phasenmesswerte benutzt werden, um für jeden Zweig einen Phasensprungwert $\Delta\varphi_n$ zu schätzen.

8. Empfänger nach Anspruch 7, **dadurch gekennzeichnet, dass** ein Mittelwert von wenigstens K Phasensprungschätzungen in jeder Messperiode berechnet wird, wobei die K Phasensprungschätzungen auf K Zweigen erhalten werden, wobei K gleich oder kleiner als die Gesamtzahl der Zweige N ist.

9. Empfänger nach einem der vorherigen Ansprüche, **dadurch gekennzeichnet, dass** die in jeder Messperiode geschätzten Phasensprungmessungen nach Kategorien klassifiziert werden.

10. Empfänger nach Anspruch 9, **dadurch gekennzeichnet, dass** zwei Messkategorien definiert werden, wobei die erste mit einem Phasensprung von $\pm\,\pi$ und die zweite mit einem Phasensprung vorn $\pm\,\pi/2$ assoziiert ist.

11. Empfänger nach einem der vorherigen Ansprüche, **dadurch gekennzeichnet, dass** die Signale von Interesse Radarimpulse sind.

FIG.1

FIG.2

EP 2 366 118 B1

FIG.3

400 —⌐ Initialisation

401 —⌐ Réception Mesure

402 —⌐ Test de validité
par voie

⌐— 405

Nombre
de voies valides
suffisant ?

non

403 —⌐

oui

404 —⌐ Moyenne

406 —⌐ Traitements
mesure finale

# FIG.4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

* FR 0601205

**Littérature non-brevet citée dans la description**

* **ADAM KONRAD RUTKOWSKI ED - VAINIKAINEN.** *Measurement of microwave signais intrapulse parameters by means of IFM methods*